# EUROPEAN PATENT SPECIFICATION

(11) **EP 3 972 116 B1**
(45) Date of publication and mention of the grant of the patent: **08.11.2023**
(21) Application number: 21195432.6
(22) Date of filing: 08.09.2021
(51) Int. Cl.: H02P 6/16, B62D 5/04, H02P 27/06

(54) **MOTOR CONTROL APPARATUS AND INDUSTRIAL VEHICLE**
MOTORSTEUERVORRICHTUNG UND INDUSTRIEFAHRZEUG
APPAREIL DE COMMANDE DE MOTEUR ET VÉHICULE INDUSTRIEL

(30) Priority: 16.09.2020 JP 2020155299
(43) Date of publication of application: 23.03.2022
(73) Proprietor: Kabushiki Kaisha Toyota Jidoshokki, Kariya-shi, Aichi 448-8671 (JP)
(72) Inventor: MATSUMOTO, Keiji, Aichi, 448-8671 (JP); YAMADA, Takefumi, Aichi, 448-8671 (JP); KODAMA, Kazuya, Aichi, 448-8671 (JP); KOSAKI, Tomohiro, Aichi, 448-8671 (JP)
(74) Representative: TBK

(56) References cited:
- EP-A1- 2 657 667
- US-A- 5 969 919
- US-A1- 2016 355 211
- US-A1- 2017 043 804

## Description

### Technical Field

The present invention relates to a motor control apparatus for controlling the operation of a motor, and an industrial vehicle equipped with the motor control apparatus.

### Background Art

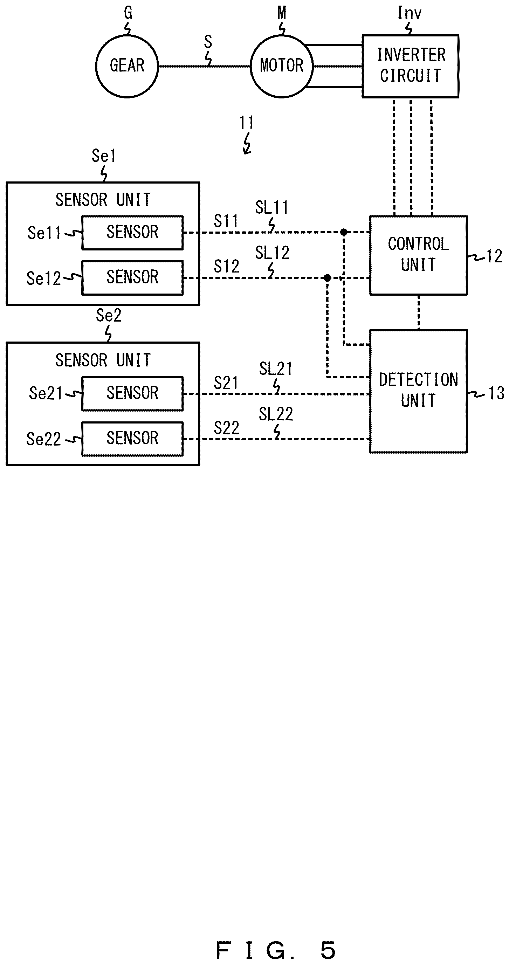

FIG. 5 illustrates an existing motor control apparatus.

A motor control apparatus 11 depicted in FIG. 5 controls the operation of a motor M in accordance with the rotation speed and the rotation direction of a gear G connected to a shaft S of the motor M and includes an inverter circuit Inv for driving the motor M, a sensor unit Se1, a sensor unit Se2, a control unit 12, and a detection unit 13. The sensor units Se1 and Se2 may be installed in the motor M.

The sensor unit Se1 includes sensors Se11 and Se12.

When the gear G is not rotated, the sensor Se11 outputs a signal S11 at a low level to the control unit 12 and the detection unit 13 via a signal line SL11. When the gear G is rotated, the sensor Se11 outputs, as a signal S11, continuous pulse waves corresponding to a plurality of teeth of the gear G.

When the gear G is not rotated, the sensor Se12 outputs a signal S12 at a low level to the control unit 12 and the detection unit 13 via a signal line SL12. When the gear G is rotated, the sensor Se12 outputs, as a signal S12, continuous pulse waves corresponding to a plurality of teeth of the gear G and having a different phase from the signal S11.

The sensor unit Se2 includes sensors Se21 and Se22.

When the gear G is not rotated, the sensor Se21 outputs a signal S21 at a low level to the detection unit 13 via a signal line SL21. When the gear G is rotated, the sensor Se21 outputs, as a signal S21, continuous pulse waves corresponding to a plurality of teeth of the gear G and having the same phase as the signal S11.

When the gear G is not rotated, the sensor Se22 outputs a signal S22 at a low level to the detection unit 13 via a signal line SL22. When the gear G is rotated, the sensor Se22 outputs, as a signal S22, continuous pulse waves corresponding to a plurality of teeth of the gear G and having the same phase as the signal S12.

The control unit 12 detects the rotation speed of the gear G by using the signal S11, detects the rotation direction of the gear G by using the signals S11 and S12, and controls the operation of the motor M by controlling the operation of the inverter circuit Inv, which drives the motor M in accordance with the rotation speed and the rotation direction.

In a case where the signal 511 remains at a low level when the signal S21 is continuous pulse waves, the detection unit 13 detects that there is an abnormality of break in the signal line SL11. In a case where the signal S12 remains at a low level when the signal S22 is continuous pulse waves, the detection unit 13 detects that there is an abnormality of break in the signal line SL12.

The motor control apparatus 11 depicted in FIG. 5 includes, as described above, the sensors Se11 and Se12 as well as the sensors Se21 and Se22, so when the signal S11 or S12 is at a low level, it can be checked whether the signal S21 or S22 is continuous pulse waves so as to determine whether the gear G is not rotating and whether the signal line SL11 or SL12 has been broken. Patent literature 1 describes relevant techniques.

Additionally, patent application publication US 2016/355211 A1 discloses an electric power steering apparatus for an electric motor. Document US 5 969 919 A discloses a drive unit for electric motor.

### Citation List

### Patent Literature

Japanese Laid-open Patent Publication No. 2001-240398

### Summary of Invention

### Technical Problem

However, since the motor control apparatus 11 depicted in FIG. 5 includes relatively many sensors and signal lines, there is concern about an increase in fabrication cost.

Accordingly, it is an object in one aspect of the present invention to provide a motor control apparatus and an industrial vehicle that allow for determination as to whether a gear is not rotating and whether there is a break in a signal line, with an increase in fabrication cost suppressed.

### Solution to Problem

A motor control apparatus in accordance with the present invention is em-defined in claim 1.

Accordingly, it can be determined whether the gear is not rotating and whether there is a break in either of the signal lines, without the need to provide a sensor in addition to the first and second sensors, thereby suppressing an increase in the cost to fabricate the motor control apparatus.

The detection unit may be configured to detect that there is an abnormality of shorting of the first and second signal lines, when the levels of the first and second signals are higher than the zero level and the continuous pulse waves of the first signal and the continuous pulse waves of the second signal have therebetween a phase difference equal to or less than a threshold.

The motor control apparatus may include a control unit that detects a rotation speed of the gear by using the first signal, detects a rotation direction of the gear by using the first and second signals, and controls an operation of the motor by using the rotation speed and the rotation direction, wherein when the abnormality is not detected, the detection unit may detect that there is an abnormality of a traveling speed of an industrial vehicle mounted with the motor being different from a target speed when the rotation speed detected using the first signal does not match a rotation speed detected using the second signal, and detect that there is an abnormality of an advancing direction of the industrial vehicle determined by the control unit being incorrect when a rotation direction received from the control unit does not match the rotation direction detected using the first and second signals.

The detection unit may be configured to stop an industrial vehicle equipped with the motor when any of the abnormalities is detected while the industrial vehicle is traveling, and disable the industrial vehicle from traveling when any of the abnormalities is detected while the industrial vehicle is stopped.

The industrial vehicle may be equipped with the motor control apparatus.

### Effects of the Invention

The present invention allows a motor control apparatus for controlling the operation of a motor to determine whether a gear connected to the shaft of the motor is not rotating and whether there is a break in a signal line connected to a sensor for detecting the rotation speed of the gear, with an increase in fabrication cost suppressed.

### Advantageous Effects of Invention

FIG. 1 illustrates an example of a motor control apparatus in accordance with embodiments;
FIGS. 2A-2C illustrate examples of signals during a normal operation;
FIGS. 3A-3C illustrate examples of signals during an abnormal operation;
FIG. 4 illustrates examples of operations of a detection unit; and
FIG. 5 illustrates an existing motor control apparatus.

### Description of Embodiments

The following describes details of embodiments on the basis of the drawings.

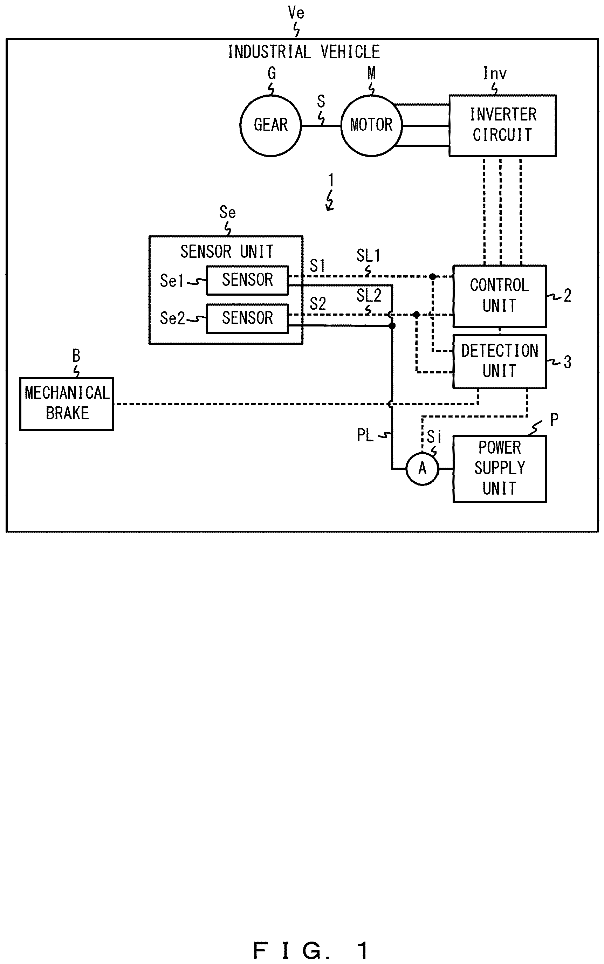

FIG. 1 illustrates an example of a motor control apparatus in accordance with embodiments.

The motor control apparatus 1 depicted in FIG. 1 is equipped in an industrial vehicle Ve such as an electric forklift truck and controls the operation of a motor M for traveling in accordance with the rotation speed and the rotation direction of a gear G connected to a shaft S of the motor M. In addition to the motor M and the motor control apparatus 1, the industrial vehicle Ve is mounted with, for example, a mechanical brake B for stopping the industrial vehicle Ve while traveling.

The motor control apparatus 1 also includes an inverter circuit Inv for driving the motor M, a power supply unit P, an ammeter Si, a sensor unit Se, a control unit 2, and a detection unit 3. The control unit 2 and the detection unit 3 may each be formed from a microcomputer. The control unit 2 and the detection unit 3 may be formed as a single body by incorporating the function of the detection unit 3 into the control unit 2. The sensor unit Se may be installed in the motor M.

The power supply unit P supplies power to sensors Se1 and Se2 via a power line PL. The motor control apparatus 1 may further include another power supply unit P, one of the power supply units P may supply power to the sensor Se1, and the other of the power supply units P may supply power to the sensor Se2.

The ammeter Si detects a current flowing through the power line PL and sends the detected current to the detection unit 3.

The sensor unit Se includes the sensor Se1 (first sensor) and the sensor Se2 (second sensor). For example, the sensors Se1 and Se2 may be formed from sensors of a current output type. Forming the sensors Se1 and Se2 from sensors of a current output type like this allows an increase in the cost to fabricate the motor control apparatus 1 to be suppressed in comparison to when the sensors Se1 and Se2 are formed from relatively expensive sensors such as resolvers.

The sensor Se1 outputs a signal S1 (first signal) to the control unit 2 and the detection unit 3 via a signal line SL1 (first signal line). The sensor Se2 outputs a signal S2 (second signal) to the control unit 2 and the detection unit 3 via a signal line SL2 (second signal line).

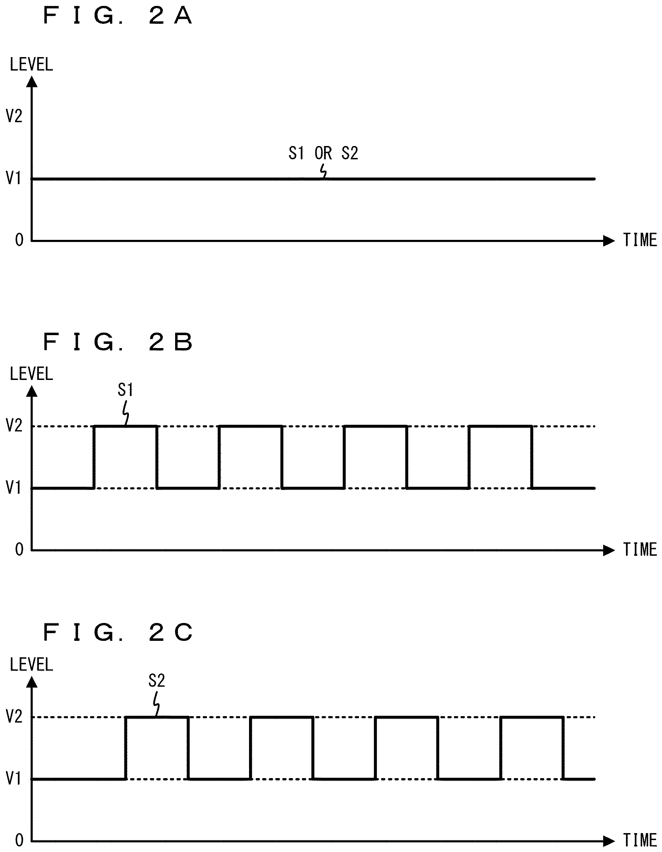

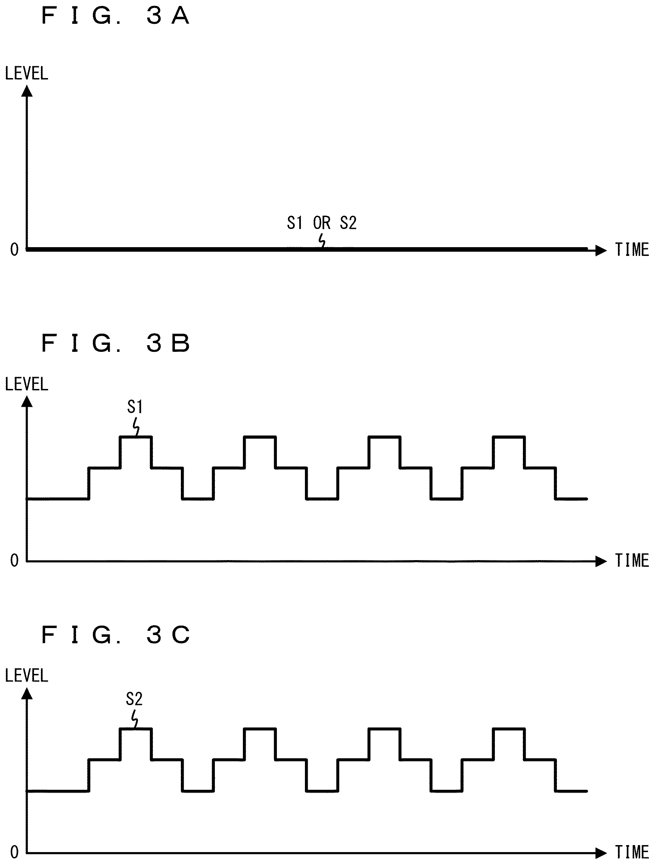

FIG. 2A depicts an example of a signal S1 or S2 provided when the gear G is not rotating during a normal operation (while no abnormalities occur) . FIG. 2B depicts an example of a signal S1 provided when the gear G is rotating during a normal operation. FIG. 2C depicts an example of a signal S2 provided when the gear G is rotating during a normal operation. FIG. 3A depicts an example of a signal S1 provided when there is an abnormality of break in the signal line SL1, a signal S1 provided when there is an abnormality of shorting of the signal line SL1 and a ground, a signal S2 provided when there is an abnormality of break in the signal line SL2, a signal S2 provided when there is an abnormality of shorting of the signal line SL2 and the ground, a signal S1 or S2 provided when there is an abnormality of break in the power line PL, or a signal S1 or S2 provided when there is an abnormality of shorting of the power line PL and the ground. FIG. 3B depicts an example of a signal S1 provided when there is an abnormality of shorting of the signal lines SL1 and SL2 while the gear G is rotating. FIG. 3C depicts an example of a signal S2 provided when there is an abnormality of shorting of the signal lines SL1 and SL2 while the gear G is rotating. Note that the horizontal axis of each of the two-dimensional coordinates depicted in FIGS. 2A-2C and FIGS. 3A-3C indicates time, and the vertical axis thereof indicates the level (voltage) of a signal S1 or S2. The level of the ground is zero.

As depicted in FIG. 2A, when the gear G is not rotating during a normal operation, the signal S1 or S2 is at a certain level (V1) higher than the zero level. Thus, when the gear G is not rotating during a normal operation, the sensor Se1 outputs a certain level higher than the zero level as a signal S1. When the gear G is not rotating during a normal operation, the sensor Se2 outputs a certain level higher than the zero level as a signal S2.

As indicated in FIG. 2B, when the gear G is rotating during a normal operation, the signal S1 is continuous pulse waves corresponding to a plurality of teeth of the gear G (rectangular waves with a low level of V1 and a high level of V2, which is higher than V1). Thus, when the gear G is rotating during a normal operation, the sensor Se1 outputs continuous pulse waves higher than the zero level as a signal S1.

As indicated in FIG. 2C, when the gear G is rotating during a normal operation, the signal S2 is continuous pulse waves corresponding to a plurality of teeth of the gear G (rectangular waves with a low level of V1 and a high level of V2, which is higher than V1) and having a different phase from the signal S1. For example, the phase difference between the signals S1 and S2 may be 1/4 of the phase of a section from a rising edge of the pulse waves to the next rising edge thereof. Thus, when the gear G is rotating during a normal operation, the sensor Se2 outputs, as a signal S2, continuous pulse waves that are higher than the zero level and have a different phase from the signal S1.

The signal S1 is, as depicted in FIG. 3A, at the zero level when there is an abnormality of break in the signal line SL1 or there is an abnormality of shorting of the signal line SL1 and the ground. Thus, the sensor Se1 outputs the zero level as a signal S1 when there is an abnormality of break in the signal line SL1 or there is an abnormality of shorting of the signal line SL1 and the ground.

The signal S2 is, as depicted in FIG. 3A, at the zero level when there is an abnormality of break in the signal line SL2 or there is an abnormality of shorting of the signal line SL2 and the ground. Thus, the sensor Se2 outputs the zero level as a signal S2 when there is an abnormality of break in the signal line SL2 or there is an abnormality of shorting of the signal line SL2 and the ground.

The signals S1 and S2 are, as depicted in FIG. 3A, at the zero level when there is an abnormality of break in the power line PL or there is an abnormality of shorting of the power line PL and the ground. Thus, the sensor Se1 outputs the zero level as a signal S1 when there is an abnormality of break in the power line PL or there is an abnormality of shorting of the power line PL and the ground. The sensor Se2 outputs the zero level as a signal S2 when there is an abnormality of break in the power line PL or there is an abnormality of shorting of the power line PL and the ground.

As indicated in FIG. 3B, when there is an abnormality of shorting of the signal lines SL1 and SL2 while the gear G is rotating, each of the continuous pulse waves of the signal S1 protrudes upward and corresponds to a combination of the pulse waves depicted in FIG. 2B and the pulse waves depicted in FIG. 2C.

As indicated in FIG. 3C, when there is an abnormality of shorting of the signal lines SL1 and SL2 while the gear G is rotating, each of the continuous pulse waves of the signal S2, as with the signal S1 depicted in FIG. 3B, protrudes upward and corresponds to a combination of the pulse waves depicted in FIG. 2B and the pulse waves depicted in FIG. 2C. The signal S2 depicted in FIG. 3C has substantially the same phase as the signal S1 depicted in FIG. 3B. Thus, when there is an abnormality of shorting of the signal lines SL1 and SL2 while the gear G is rotating, the sensors Se1 and Se2 output, as signals S1 and S2, continuous pulse waves that are higher than the zero level and have substantially the same phase.

When no abnormalities have been detected by the detection unit 3, the control unit 2 depicted in FIG. 1 detects a rotation speed N1 of the gear G by using a signal S1. For example, the control unit 2 may define, as the rotation speed N1, a value obtained by dividing the phase of a section from a rising edge of the pulse waves of the signal S1 to the next rising edge thereof by the time extending from a rising timing of the pulse waves of the signal S1 to the next rising timing thereof.

The control unit 2 detects a rotation direction D1 of the gear G by using signals S1 and S2. For example, the control unit 2 may set a normal rotation for the rotation direction D1 of the gear G when the phase of the signal S2 delays that of the signal S1, and sets a reverse rotation for the rotation direction D1 of the gear G when the phase of the signal S2 advances that of the signal S1.

The control unit 2 controls the operation of the motor M by controlling the operation of the inverter circuit Inv such that the rotation speed N1 is a certain rotation speed and the rotation direction D1 is a certain rotation direction. The certain rotation speed is a rotation speed of the motor M that corresponds to a target speed input for the industrial vehicle Ve by, for example, a user operating an accelerator. The certain rotation direction is a rotation direction of the motor M that corresponds to an advancing direction input for the industrial vehicle Ve by, for example, a user using a shift lever.

When the signal S1 is continuously at the zero level, the detection unit 3 detects that there is an abnormality of break in the signal line SL1. The detection unit 3 may be configured to detect, when the signal S1 is continuously at the zero level, that there is an abnormality of shorting of the signal line SL1 and the ground.

When the signal S2 is continuously at the zero level, the detection unit 3 detects that there is an abnormality of break in the signal line SL2. The detection unit 3 may be configured to detect, when the signal S2 is continuously at the zero level, that there is an abnormality of shorting of the signal line SL2 and the ground.

The detection unit 3 detects that there is an abnormality of shorting of the signal lines SL1 and SL2, when the levels of the signals S1 and S2 are higher than the zero level and the continuous pulse waves of the signal S1 and the continuous pulse waves of the signal S2 have therebetween a phase difference equal to or less than a threshold. The threshold may be set to a value corresponding to noise contained in the signal S1 and/or the signal S2.

The detection unit 3 detects the rotation speed N1 of the gear G by using the signal S1 and detects a rotation speed N2 of the gear G by using the signal S2. For example, the control unit 2 may define, as the rotation speed N1, a value obtained by dividing the phase of a section from a rising edge of the pulse waves of the signal S1 to the next rising edge thereof by the time extending from a rising timing of the pulse waves of the signal S1 to the next rising timing thereof. The control unit 2 may define, as the rotation speed N2, a value obtained by dividing the phase of a section from a rising edge of the pulse waves of the signal S2 to the next rising edge thereof by the time extending from a rising timing of the pulse waves of the signal S2 to the next rising timing thereof.

When the rotation speed N1 does not match the rotation speed N2, the detection unit 3 detects that there is an abnormality of the traveling speed of the industrial vehicle Ve being different from a target speed.

The detection unit 3 receives a rotation direction D1 from the control unit 2 and detects a rotation direction D2 of the gear G by using the signals S1 and S2. When the rotation direction D1 does not match the rotation direction D2, the detection unit 3 detects that there is an abnormality of the advancing direction of the industrial vehicle Ve determined by the control unit 2 being incorrect.

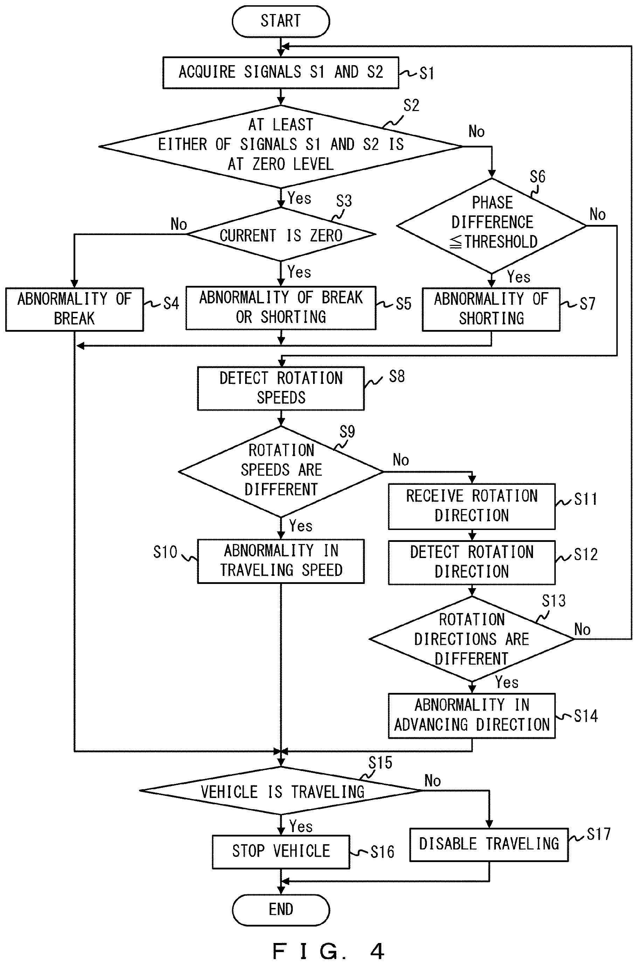

FIG. 4 illustrates examples of operations of the detection unit 3. The operations indicated in FIG. 4 are performed by the detection unit 3 every time a unit time elapses .

First, the detection unit 3 acquires signals S1 and S2 (step S1) .

Next, when at least either of the signals S1 and S2 is at a zero level (step S2: Yes) and a non-zero current is flowing through the power line PL (step S3: No), the detection unit 3 detects that there is an abnormality of break in the signal line SL1 or SL2 (step S4). In particular, in step S4, the detection unit 3 detects that there is an abnormality of break in the signal line SL1 when the signal S1 is at the zero level, and detects that there is an abnormality of break in the signal line SL2 when the signal S2 is at the zero level. The detection unit 3 may be configured such that in step S4, when the signals S1 and S2 are at the zero level, the detection unit 3 detects that the motor M has been stopped, and then returns to step S1.

When at least either of the signals S1 and S2 is at the zero level (step S2: Yes) and a zero current is flowing through the power line PL (step S3: Yes), the detection unit 3 detects that there is an abnormality of break in the power line PL or there is an abnormality of shorting of the power line PL and the ground (step S5).

When the levels of the signals S1 and S2 are higher than the zero level (step S2: No) and the continuous pulse waves of the signal S1 and the continuous pulse waves of the signal S2 have therebetween a phase difference equal to or less than a threshold (step S6: Yes), the detection unit 3 detects that there is an abnormality of shorting of the signal lines SL1 and SL2 (step S7).

When the levels of the signals S1 and S2 are higher than the zero level (step S2: No) and the continuous pulse waves of the signal S1 and the continuous pulse waves of the signal S2 have therebetween a phase difference greater than the threshold (step S6: No), the detection unit 3 detects rotation speeds N1 and N2 (step S8).

Next, when the rotation speed N1 does not match the rotation speed N2 (step S9: Yes), the detection unit 3 detects that there is an abnormality of the traveling speed of the industrial vehicle Ve being different from a target speed (step S10). In this way, the process of monitoring the traveling speed of the industrial vehicle Ve can have redundancy. The detection unit 3 may be configured to detect that there is an abnormality of the traveling speed of the industrial vehicle Ve being different from a target speed when the rotation speed N1 or N2 does not match a certain rotation speed.

When the rotation speed N1 matches the rotation speed N2 (step S9: No), the detection unit 3 receives a rotation direction D1 from the control unit 2 (step S11) and detects a rotation direction D2 of the gear G by using the signals S1 and S2 (step S12) . Note that the order in which steps S11 and S12 are performed may be reversed.

Next, when the rotation direction D1 does not match the rotation direction D2 (step S13: Yes), the detection unit 3 detects that there is an abnormality of the advancing direction of the industrial vehicle V2 determined by the control unit 2 being incorrect (step S14). In this way, the process of monitoring the advancing direction of the industrial vehicle Ve can have redundancy. The detection unit 3 may be configured to detect that there is an abnormality of the advancing direction of the industrial vehicle Ve determined by the control unit 2 being incorrect, when the rotation direction D1 or D2 does not match a certain rotation direction.

The detection unit 3 returns to the process of step S1 when the rotation direction D1 matches the rotation direction D2, i.e., when none of the abnormalities (the abnormality of break in the signal line SL1 or S2, the abnormality of shorting of the ground and the signal line SL1 or SL2, the abnormality of break in the power line PL, the abnormality of shorting of the power line PL and the ground, the abnormality of shorting of the signal lines SL1 and SL2, the abnormality in the traveling speed of the industrial vehicle Ve, and the abnormality in the advancing direction of the industrial vehicle Ve) have occurred (step S13: No).

When any one of the abnormalities has been detected and when the industrial vehicle Ve is traveling (step S15: Yes), the detection unit 3 gradually decreases the traveling speed of the industrial vehicle Ve and then stops the same (step S16) . For example, the detection unit 3 may gradually decrease the duty ratio of a control signal output from the control unit 2 to the inverter circuit Inv so as to gradually decrease the rotation speed of the motor M, and then stop the motor M by decreasing the duty ratio of the control signal to zero. Alternatively, by controlling the operation of the mechanical brake B, the detection unit 3 may gradually decrease the traveling speed of the industrial vehicle Ve and then stop the same. The detection unit 3 may be configured to control the operation of the motor M such that when any one of the abnormalities has been detected while the industrial vehicle Ve is traveling, the current advancing direction of the industrial vehicle Ve is maintained.

When any one of the abnormalities has been detected and when the industrial vehicle Ve is not traveling (step S15: No), the detection unit 3 disables the industrial vehicle Ve from traveling (step S17). For example, the detection unit 3 may disable the motor M from rotating by setting the duty ratio of the control signal to zero. Alternatively, the detection unit 3 may disable the industrial vehicle Ve from traveling by controlling the operation of the mechanical brake B.

As described above, the motor control apparatus 1 in accordance with embodiments is configured to detect, for example, an abnormality of break in the signal line SL1 or SL2 by using the sensors Se1 and Se2, so the number of sensors Se1 and Se2 and the number of signal lines SL1 and SL2 can be relatively small. For example, the number of sensors and the number of signal lines may each be decreased by two in comparison with the existing motor control apparatus 11 depicted in FIG. 5. Hence, an increase in the cost to fabricate the motor control apparatus 1 can be suppressed.

### First Variation

The detection unit 3 may omit the processes of steps S3, S5, and S6-S17 indicated in FIG. 4. In such a configuration, when at least either of the signals S1 and S2 is at a zero level (step S2: Yes), the detection unit 3 detects that there is an abnormality of break in the signal line SL1 or SL2 (step S4) . When the levels of the signals S1 and S2 are higher than the zero level (step S2: No), the detection unit 3 returns to the process of step S1. In such a configuration, the control unit 2, instead of the detection unit 3, may perform the processes of steps S15-S17.

### Second Variation

The detection unit 3 may omit the processes of steps S6-S17 indicated in FIG. 4. In such a configuration, when the levels of the signals S1 and S2 are higher than the zero level (step S2: No), the detection unit 3 returns to the process of step S1. In such a configuration, the control unit 2, instead of the detection unit 3, may perform the processes of steps S15-S17.

### Third Variation

The detection unit 3 may omit the processes of steps S8-S17 indicated in FIG. 4. In such a configuration, when the continuous pulse waves of the signal S1 and the continuous pulse waves of the signal S2 have therebetween a phase difference greater than a threshold (step S6: No), the detection unit 3 returns to the process of step S1. In such a configuration, the control unit 2, instead of the detection unit 3, may perform the processes of steps S15-S17.

### Fourth Variation

The detection unit 3 may omit the processes of steps S15-S17 indicated in FIG. 4. In such a configuration, the control unit 2, instead of the detection unit 3, may perform the processes of steps S15-S17.

### Reference Signs List

- 1: Motor control apparatus
- 2: Control unit
- 3: Detection unit
- Ve: Industrial vehicle
- M: Motor
- G: Gear
- Inv: Inverter circuit
- P: Power supply unit
- PL: Power line
- Si: Ammeter
- Se: Sensor unit
- Se1, Se2: Sensor
- SL1, SL2: Signal line
- B: Mechanical brake

A motor control apparatus for controlling the operation of a motor determines whether a gear connected to the shaft of the motor is rotating and whether there is a break in a signal line connected to a sensor for detecting the rotation speed of the gear, with an increase in fabrication cost suppressed. A motor control apparatus 1 includes a sensor Se1 that outputs a signal S1, a sensor Se2 that outputs a signal S2, and a detection unit 3 that detects that there is an abnormality of break in a signal line SL1 when the signal S1, which is acquired via the signal line SL1, is at a zero level, and detects that there is an abnormality of break in a signal line SL2 when the signal S2, which is acquired via the signal line SL2, is at the zero level.

## Claims

1. A motor control apparatus (1) for controlling an operation of a motor (M), the motor control apparatus (1) comprising:
a first sensor (Se1) that outputs, as a first signal, a certain level that is higher than a zero level when a gear (G) connected to a shaft of the motor (M) is not rotating, and outputs, as the first signal, continuous pulse waves that are higher than the zero level when the gear (G) is rotating;
a second sensor (Se2) that outputs, as a second signal, a certain level that is higher than the zero level when the gear (G) is not rotating, and outputs, as the second signal, continuous pulse waves that are higher than the zero level, **characterized in that**
the continuous pulse waves of the second signal have a different phase from the first signal when the gear (G) is rotating; and **by**
a detection unit (3) that detects that there is an abnormality of break in a first signal line (SL1) when the first signal, which is acquired via the first signal line (SL1), is at the zero level, and detects that there is an abnormality of break in a second signal line (SL2) when the second signal, which is acquired via the second signal line (SL2), is at the zero level; and
the detection unit (3) detects that there is an abnormality of break in a power line (PL) through which power is supplied to the first and second sensors (Se1, Se2) or that there is an abnormality of shorting of the power line (PL) and a ground, when at least either of the first and second signals is at the zero level and a zero current is flowing through the power line (PL).

2. The motor control apparatus (1) of claim 1, wherein
the detection unit (3) detects that there is an abnormality of shorting of the first and second signal lines (SL1, SL2), when the levels of the first and second signals are higher than the zero level and the continuous pulse waves of the first signal and the continuous pulse waves of the second signal have therebetween a phase difference equal to or less than a threshold.

3. The motor control apparatus (1) of claim 2, further comprising:
a control unit (2) that detects a rotation speed of the gear (G) by using the first signal, detects a rotation direction of the gear (G) by using the first and second signals, and controls the operation of the motor (M) by using the rotation speed and the rotation direction, wherein
when the abnormality is not detected, the detection unit (3) detects that there is an abnormality of a traveling speed of an industrial vehicle (Ve) mounted with the motor (M) being different from a target speed when the rotation speed detected using the first signal does not match a rotation speed detected using the second signal, and detects that there is an abnormality of an advancing direction of the industrial vehicle (Ve) determined by the control unit (2) being incorrect when a rotation direction received from the control unit (2) does not match the rotation direction detected using the first and second signals.

4. The motor control apparatus (1) of any one of claims 1-3, wherein
the detection unit (3) stops an industrial vehicle (Ve) equipped with the motor (M) when any of the abnormalities is detected while the industrial vehicle (Ve) is traveling, and disables the industrial vehicle (Ve) from traveling when any of the abnormalities is detected while the industrial vehicle (Ve) is stopped.

5. An industrial vehicle (Ve) comprising the motor control apparatus (1) of any one of claims 1-4.

## Patentansprüche

1. Eine Motorsteuervorrichtung (1) zum Steuern eines Betriebs eines Motors (M), mit:
einem ersten Sensor (Se1), der als ein erstes Signal ein bestimmtes Niveau ausgibt, das höher als ein Nullniveau ist, wenn ein zu einem Schaft des Motors (M) verbundener Gang (G) nicht rotiert, und der als das erste Signal kontinuierliche Pulswellen ausgibt, die höher als das Nullniveau sind, wenn der Gang (G) rotiert;
einem zweiten Sensor (Se2), der als ein zweites Signal ein bestimmtes Niveau ausgibt, das höher als das Nullniveau ist, wenn der Gang (G) nicht rotiert, und der als das zweite Signal kontinuierliche Pulswellen ausgibt, die höher als das Nullniveau sind, **dadurch gekennzeichnet, dass** die kontinuierlichen Pulswellen des zweiten Signals eine andere Phase als das erste Signal haben, wenn der Gang (G) rotiert; und **indem**
eine Detektiereinheit (3) detektiert, dass es eine Anomalität einer Bremse in einer ersten Signalleitung (SL1) gibt, wenn das erste Signal, das über die erste Signalleitung (SL1) erfasst wird, auf dem Nullniveau ist, und detektiert, dass es eine Anomalität einer Bremse in einer zweiten Signalleitung (SL2) gibt, wenn das zweite Signal, das über die zweite Signalleitung (SL2) erfasst wird, auf dem Nullniveau ist; und
die Detektiereinheit (3) detektiert, dass es eine Anomalität einer Bremse in einer Energieleitung (PL) gibt, über die Energie an den ersten und den zweiten Sensor (Se1, Se2) bereitgestellt wird, oder dass es eine Anomalität eines Kurzschlusses der Energieleitung (PL) und einer Erdung gibt, wenn mindestens eines des ersten und des zweiten Signals auf dem Nullniveau ist und ein Null-Strom durch die Energieleitung (PL) fließt.

2. Die Motorsteuervorrichtung (1) nach Anspruch 1, wobei
die Detektiereinheit (3) detektiert, dass es eine Anomalität eines Kurzschlusses der ersten und der zweiten Signalleitungen (SL1, SL2) gibt, wenn die Niveaus des ersten und des zweiten Signals höher als das Nullniveau sind und die kontinuierlichen Pulswellen des ersten Signals und die kontinuierlichen Pulswellen des zweiten Signals zwischen einander einen Phasenunterschied haben, der gleich wie oder kleiner als ein Grenzwert ist.

3. Die Motorsteuervorrichtung (1) nach Anspruch 2, ferner mit:
einer Steuereinheit (2), die eine Rotationsgeschwindigkeit des Gangs (G) durch Verwenden des ersten Signals detektiert, eine Rotationsrichtung des Gangs (G) durch Verwenden des ersten und des zweiten Signals detektiert, und die den Betrieb des Motors (M) durch Verwenden der Rotationsgeschwindigkeit und der Rotationsrichtung steuert, wobei
wenn die Anomalität nicht detektiert wird, die Detektiereinheit (3) detektiert, dass es eine Anomalität einer Bewegungsgeschwindigkeit eines industriellen Fahrzeugs (Ve) gibt, an dem der Motor (M) angebracht ist, die unterschiedlich von einer Zielgeschwindigkeit ist, wenn die unter Verwendung des ersten Signals detektierte Rotationsgeschwindigkeit nicht mit einer unter Verwendung des zweiten Signals erhaltenen Rotationsgeschwindigkeit übereinstimmt, und detektiert, dass es eine Anomalität einer von der Steuereinheit (2) bestimmten Bewegungsrichtung des industriellen Fahrzeugs (Ve) gibt, die falsch ist, wenn eine von der Steuereinheit (2) empfangene Rotationsrichtung nicht mit der unter Verwendung des ersten und des zweiten Signals detektierten Rotationsrichtung übereinstimmt.

4. Die Motorsteuervorrichtung (1) nach einem der Ansprüche 1 bis 3, wobei
die Detektiereinheit (3) ein industrielles Fahrzeug (Ve) anhält, das mit dem Motor (M) ausgestattet ist, wenn eine der Anomalitäten detektiert wird, während das industrielle Fahrzeug (Ve) sich bewegt, und eine Bewegung des industriellen Fahrzeugs (Ve) blockiert, wenn eine der Anomalitäten detektiert wird während das Fahrzeug (Ve) angehalten ist.

5. Ein industrielles Fahrzeug (Ve) mit der Motorsteuervorrichtung (1) nach einem der Ansprüche 1 bis 4.

## Revendications

1. Appareil de commande de moteur (1) pour commander un fonctionnement d'un moteur (M), l'appareil de commande de moteur (1) comprenant :
un premier capteur (Se1) qui délivre, en tant que premier signal, un certain niveau qui est supérieur à un niveau zéro lorsqu'un engrenage (G) relié à un arbre du moteur (M) ne tourne pas, et délivre, en tant que premier signal, des ondes d'impulsion continue qui sont supérieures au niveau zéro lorsque l'engrenage (G) tourne ;
un second capteur (Se2) qui délivre, en tant que second signal, un certain niveau qui est supérieur au niveau zéro lorsque l'engrenage (G) ne tourne pas, et délivre, en tant que second signal, des ondes d'impulsion continue qui sont supérieures au niveau zéro, **caractérisé en ce que**
les ondes d'impulsion continue du second signal ont une phase différente du premier signal lorsque l'engrenage (G) tourne ; et **par**
une unité de détection (3) qui détecte qu'il existe une anomalie de rupture dans une première ligne de signal (SL1) lorsque le premier signal, qui est acquis par l'intermédiaire de la première ligne de signal (SL1), est au niveau zéro, et détecte qu'il existe une anomalie de rupture dans une seconde ligne de signal (SL2) lorsque le second signal, qui est acquis par l'intermédiaire de la seconde ligne de signal (SL2), est au niveau zéro ; et
l'unité de détection (3) détecte qu'il existe une anomalie de rupture dans une ligne électrique (PL) à travers laquelle de l'énergie est fournie aux premier et second capteurs (Se1, Se2) ou qu'il existe une anomalie de court-circuit de la ligne électrique (PL) et une masse, lorsqu'au moins l'un ou l'autre des premier et second signaux est au niveau zéro et qu'un courant nul circule à travers la ligne électrique (PL).

2. Appareil de commande de moteur (1) selon la revendication 1, dans lequel
l'unité de détection (3) détecte qu'il existe une anomalie de court-circuit des première et seconde lignes de signal (SL1, SL2), lorsque les niveaux des premier et second signaux sont supérieurs au niveau zéro et que les ondes d'impulsion continue du premier signal et les ondes d'impulsion continue du second signal ont entre elles une différence de phase inférieure ou égale à un seuil.

3. Appareil de commande de moteur (1) selon la revendication 2, comprenant en outre :
une unité de commande (2) qui détecte une vitesse de rotation de l'engrenage (G) à l'aide du premier signal, détecte une direction de rotation de l'engrenage (G) à l'aide des premier et second signaux, et commande le fonctionnement du moteur (M) à l'aide de la vitesse de rotation et de la direction de rotation, dans lequel
lorsque l'anomalie n'est pas détectée, l'unité de détection (3) détecte qu'il existe une anomalie d'une vitesse de déplacement d'un véhicule industriel (Ve) monté avec le moteur (M) qui est différente d'une vitesse cible lorsque la vitesse de rotation détectée à l'aide du premier signal ne correspond pas à une vitesse de rotation détectée à l'aide du second signal, et détecte qu'il existe une anomalie d'une direction d'avancement du véhicule industriel (Ve) déterminée par l'unité de commande (2) qui est incorrecte lorsqu'une direction de rotation reçue de l'unité de commande (2) ne correspond pas à la direction de rotation détectée à l'aide des premier et second signaux.

4. Appareil de commande de moteur (1) selon l'une quelconque des revendications 1 à 3, dans lequel
l'unité de détection (3) arrête un véhicule industriel (Ve) équipé du moteur (M) lorsque l'une quelconque des anomalies est détectée pendant que le véhicule industriel (Ve) se déplace, et empêche le véhicule industriel (Ve) de se déplacer lorsque l'une quelconque des anomalies est détectée pendant que le véhicule industriel (Ve) est arrêté.

5. Véhicule industriel (Ve) comprenant l'appareil de commande de moteur (1) selon l'une quelconque des revendications 1 à 4.
